# EUROPÄISCHE PATENTSCHRIFT

(11) **EP 0 647 691 B1**
(45) Veröffentlichungstag und Bekanntmachung des Hinweises auf die Patenterteilung: **08.04.1998**
(21) Anmeldenummer: 94100473.1
(22) Anmeldetag: 14.01.1994
(51) Int. Cl.: C09J 7/02, C09J 7/04

(54) **Klebeband sowie Verwendung des Klebebandes zum Umwickeln eines Leitungssatzes**
Adhesive tape and its use in wrapping a wire harness
Ruban adhésif ainsi que son utilisation pour envelopper un faisceau de fils conducteurs

(30) Priorität: 06.10.1993 DE 4334039
(43) Veröffentlichungstag der Anmeldung: 12.04.1995
(73) Patentinhaber: COROPLAST FRITZ MÜLLER KG, D-42279 Wuppertal (DE)
(72) Erfinder: Zappe, Frank, Dipl.-Ing., D-44575 Castrop-Rauxel (DE); Lodde, Christoph, Dipl.-Ing., D-44225 Dormund (DE); Mauksch, Harri, D-96049 Bamberg (DE)
(74) Vertreter: Zapf, Christoph, Dipl.-Ing.

(56) Entgegenhaltungen:
- EP-A- 0 246 656
- US-A- 3 068 117
- DATABASE WPI Section Ch, Week 7548, Derwent Publications Ltd., London, GB; Class A81, AN 75-79516W & JP-B-50 033 702 (NITTO ELECTRIC IND KK) 1. November 1975
- PATENT ABSTRACTS OF JAPAN vol. 012, no. 312 (C-523)24. August 1988 & JP-A-63 081 188 (KANEGAFUCHI CHEM IND CO LTD) 12. April 1988

## Beschreibung

Die vorliegende Erfindung betrifft ein Klebeband, bestehend aus einem flexiblen, bandförmigen Träger und einer selbstklebende Eigenschaften aufweisenden Beschichtung.

In der Kfz-Industrie werden zum Einbau in Kraftfahrzeuge oftmals formstabile Leitungssätze, insbesondere sogenannte Kabelbäume, benötigt. Zum Herstellen solcher Leitungssätze ist es bekannt, zunächst flexible Einzel-Leitungen - gegebenenfalls in einem zum Zusammenhalten z.B. durch Bindungen vorfixierten Zustand - in eine der gewünschten Verlaufsform entsprechende Schalenform einzulegen und dann mit einem Material zu umschäumen, welches dann aushärtet und so dem Leitungssatz eine zum Einbau vorteilhafte und auch einen mechanischen Schutz bewirkende Formstabilität verleiht. Hierbei ist einerseits ein recht großer Herstellungsaufwand zum Umschäumen von Nachteil. Ferner vergrößert sich durch das Umschäumen der Leitungssatz ziemlich stark im Durchmesser, weshalb er viel Einbauraum sowie auch viel Transport- und Lagerraum benötigt. Für den Transport und die Lagerung (Vorratshaltung) ist zudem die Formstabilität der Leitungsssätze sogar ein Nachteil, weil solche Leitungssätze in der Regel eine recht große, sich z.B. über die Ausmaße eines ganzen Fahrzeuges erstreckende und daher zum Teil auch dreidimensionale Verlaufsform aufweisen.

Eine Herstellung eines Leitungssatzes durch Umwickeln mit einem üblichen, gattungsgemäßen Klebeband hätte demgegenüber zwar den Vorteil, daß der Leitungssatz bei Transport, Lagerung und im eingebauten Zustand wenig Platz benötigen würde, jedoch könnte damit nicht ohne weiteres, d.h. nicht ohne einen zusätzlichen Arbeitsschritt, die gewünschte Formstabilität erreicht werden.

Die EP-A-0 246 656 beschreibt ein beispielsweise band- bzw. streifenförmiges, selbstklebendes Material, bestehend aus einem Träger, der einseitig mit einer selbstklebenden Beschichtung und anderseitig mit einer speziellen Materialschicht beschichtet ist. Das so beschichtete Trägermaterial soll auf mindestens 140° C erwärmt werden, um die spezielle Materialschicht zu verfestigen und dadurch gleichzeitig auch ein oberflächig profiliertes, "dreidimensionales" Produkt zu erhalten. Es soll eine Profiltiefe von mindestens 0,1 bis 1 mm erreicht werden. Für größere Profiltiefen von z.B. 10 bis 15 mm soll es sich vorzugsweise um ein aufschäumbares Material handeln. Für die Aushärtung und Oberflächen-Profilierung enthält das Material beispielsweise ein Vinyl-Polymer. Dieses bekannte Klebematerial soll beispielsweise zur Herstellung von Zierprofilen für Gebäude, z.B. für Stuckdecken, bei Möbeln oder Bilderrahmen verwendet werden, um die bisher dafür üblichen Materialien, wie z.B. Gips und Holz, zu ersetzen.

Der Erfindung liegt die Aufgabe zugrunde, eine Möglichkeit zu schaffen, insbesondere formstabile Leitungssätze auf preiswertere, einfachere Weise herstellen zu können und dabei vorzugsweise auch deren Handhabbarkeit bei Lagerung, Transport und Einbau zu verbessern.

Erfindungsgemäß wird dies durch ein Klebeband mit den Merkmalen des Anspruchs 1 erreicht. Vorteilhafte Ausgestaltungsmerkmale sind Gegenstand der Unteransprüche.

Erfindungsgemäß besteht somit der Träger und/oder die Beschichtung zumindest anteilig aus einem Material, welches vor einem erstmaligen Erhitzen auf eine bestimmte, materialspezifische Aushärttemperatur zunächst flexibel ist, so daß auch das Klebeband selbst entsprechend flexibel ist und daher in einer üblichen Weise verarbeitet und somit praktisch als "normales" Klebeband verwendet werden kann. Nach einer vorübergehenden Erhitzung zumindest auf die Aushärttemperatur erhält dann das erfindungsgemäße Klebeband auf grund der dadurch bewirkten Aushärtung der aushärtbaren Materialkomponente eine hohe Formstabilität, indem das Material bzw. die aushärtbare Materialkomponente vorzugsweise duroplastische Eigenschaften bekommt.

Das erfindungsgemäße Klebeband eignet sich für verschiedenartige, praktisch beliebige Anwendungsfälle. Eine bevorzugte Verwendung ist allerdings für die oben erwähnte Herstellung von formstabilen Leitungssätzen, wobei erfindungsgemäß ein aus mindestens einer - selbst flexiblen - Leitung bestehender Leitungssatz über seinen Verlauf hinweg mit dem erfindungsgemäßen Klebeband umwickelt wird,wobei das Klebeband sich vorzugsweise randlich etwas überlappt, um den Leitungssatz vollständig "schlauchartig" zu umhüllen. Der hierdurch gebildete Leitungssatz ist dann zunächst vorteilhafterweise noch grundsätzlich flexibel, so daß er - z.B. in einem aufgerollten oder zusammengelegten ("gefalteten") Zustand - sehr platzsparend gelagert und transportiert werden kann. Der Leitungssatz wird dann entweder kurz vor seinem Einbau oder aber unmittelbar während des Einbaus in die jeweils gewünschte Verlaufsform gebracht und dann kurzzeitig auf die Aushärttemperatur der aushärtbaren Materialkomponente des erfindungsgemäßen Klebebandes erhitzt und hierdurch formstabil gemacht, da das Klebeband mit seiner durch die Aushärtung entstehenden Formstabilität den Leitungssatz praktisch noch "stärker" formstabilisiert, weil die Klebeband-Umwicklung nach Aushärtung praktisch ein stabiles Rohr bildet, wodurch vorteilhafterweise auch ein mechanischer Schutz der Leitungen gewährleistet wird. Zweckmäßigerweise hat das erfindungsgemäße Klebeband auch elektrische Isolationseigenschaften. Das für die Aushärtung notwendige Erhitzen kann auf einfache Weise mittels eines üblichen Heißluftgebläses erfolgen.

Es kann vorteilhaft sein, den umwickelten und zunächst noch flexiblen Leitungssatz bereits zum Zwecke der Lagerung und des Transportes bereichsweise durch Erhitzen auszuhärten bzw. formstabil zu machen, wobei jeweils zwischen formstabilen Abschnitten flexible Bereiche verbleiben, die praktisch "Scharniere" bilden, die ein leichtes Zusammenlegen (Falten) des Leitungssatzes ermöglichen. Unmittelbar vor oder nach dem Einbau können dann auch die flexiblen "Scharnierabschnitte" noch durch Erhitzen formstabil gemacht werden.

Bei der beschriebenen, bevorzugten Verwendung des erfindungsgemäßen Klebebandes kann es sich bei dem Leitungssatz nicht nur um einen aus flexiblen elektrischen Leitern bestehenden Kabelbaum handeln, sondern der Leitungssatz kann praktisch beliebige Leitungsarten und Kombinationen hiervon enthalten und zwar insbesondere elektrische Leiter und/oder Schlauch- oder Rohrleitungen für pneumatische und/oder hydraulische Medien. Ferner können natürlich auch sogenannte Lichtleiter innerhalb des Leitungssatzes vorgesehen sein.

Vorteilhafte Ausgestaltungsmerkmale der Erfindung insbesondere bezüglich des genaueren Aufbaus des erfindungsgemäßen Klebebandes und der speziellen Zusammensetzung der aushärtbaren Schicht sind in den Unteransprüchen enthalten.

Im folgenden wird die Erfindung anhand von bevorzugten Ausführungs- und Verwendungsbeispielen näher erläutert. Dabei zeigen:
- Fig. 1: eine Perspektivansicht eines zu einer Rolle aufgerollten, erfindungsgemäßen Klebebandes,
- Fig. 2: einen vergrößerten Querschnitt durch das Klebeband längs der Linie II-II in Fig. 1,
- Fig. 3 und 3a: jeweils eine Darstellung analog zu Fig. 2, allerdings in dazu alternativen Ausführungsformen und
- Fig. 4: eine bespielhafte Darstellung eines Stückes eines mit dem erfindungsgemäßen Klebeband umwickelten Leitungssatzes.

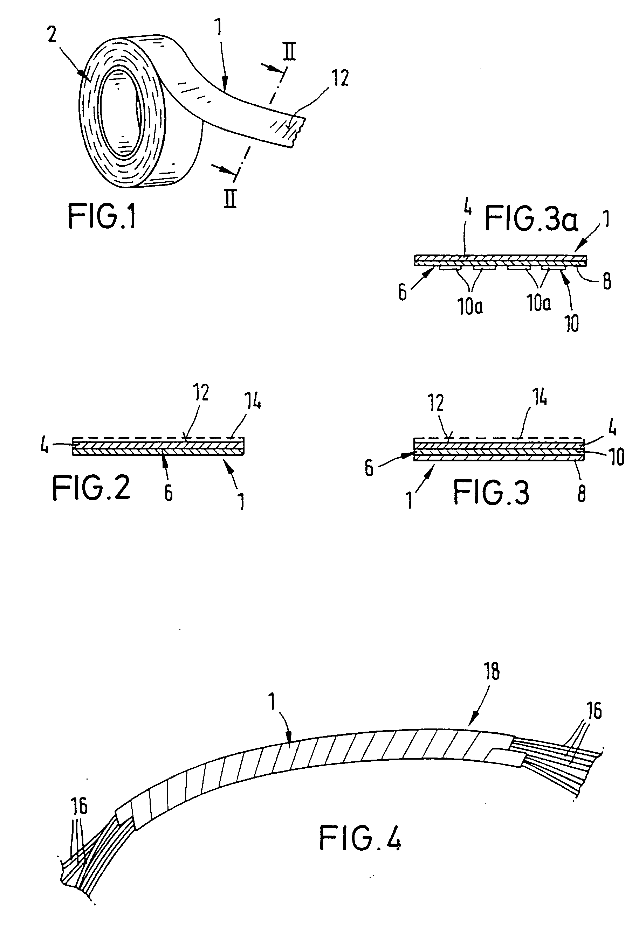

Gemäß Fig. 1 ist ein erfindungsgemäßes Klebeband 1 vorzugsweise - wie an sich auch üblich - zu einer Rolle 2 aufgerollt und daher zur Verwendung von der Rolle 2 abziehbar. Wie sich aus Fig. 2 und 3 ergibt, besteht das Klebeband 1 aus einem bandförmigen, flexiblen Träger 4 sowie einer zumindest im Bereich ihrer dem Träger 4 abgekehrten Oberfläche selbstklebende Eigenschaften aufweisenden Beschichtung 6.

Erfindungsgemäß ist nun dem Träger 4 und/oder der Beschichtung 6 (mindestens) eine durch Erhitzen aushärtbare Materialkomponente (chemische Stoffkomponente) derart zugegeben, daß das Klebeband nach einem entsprechenden Erhitzen und dadurch bewirkter Aushärtung der speziellen Materialkomponente - insbesondere über seine gesamte Flächenausdehnung hinweg gleichmäßige - formstabile Eigenschaften erhält.

Bei der in Fig. 2 veranschaulichten, besonders vorteilhaften und daher bevorzugten Ausführungsform ist die aushärtbare Materialkomponente in der einschichtigen Beschichtung 6 enthalten, so daß die Beschichtung 6 durch die spezielle, darin enthaltene Materialkomponente eine aushärtbare Schicht bildet, die einerseits übliche Klebeeigenschaften hat, andererseits aber zudem auch - nach Erhitzen und Aushärten - erfindungsgemäß die Formstabilität bewirkt. Diese Ausführungsform ist deshalb besonders vorteilhaft, weil bei der Herstellung des Klebebandes 1 lediglich ein einziger Beschichtungsvorgang mit dem Material der Beschichtung 6 erforderlich ist, wobei dieses Material aus einer speziellen, im folgenden noch genauer spezifizierten Mischung besteht.

Alternativ dazu ist in Fig. 3 die Möglichkeit veranschaulicht, die Beschichtung 6 zweischichtig aus einer Kleberschicht 8 und einer gesonderten Zusatzschicht 10 zu bilden, die dann vorzugsweise - wie dargestellt - zwischen dem Träger 4 und der Kleberschicht 8 angeordnet ist, aber durchaus auch auf der der Kleberschicht 8 abgekehrten Seite des Trägers 4 angeordnet sein könnte.

Bei der in Fig.3a veranschaulichten Ausführungsform ist die Beschichtung 6 ebenfalls zweischichtig als Kleberschicht 8 und Zusatzschicht 10 ausgebildet, wobei aber die Kleberschicht 8 auf dem Träger 4 angeordnet ist, während die Zusatzschicht 10 dann auf die Kleberschicht 8 aufgebracht ist. Um hierbei dennoch die selbstklebenden Eigenschaften zu gewährleisten, deckt die Zusatzschicht 10 die Kleberschicht 8 nicht vollflächig, sondern nur flächenbereichsweise ab, d.h. die Zusatzschicht 10 besteht aus einzelnen Punkten oder Abschnitten 10a.

In beiden Fällen braucht die Zusatzschicht 10 keine Klebeeigenschaften aufzuweisen, sondern besteht vorzugsweise lediglich aus einem die Aushärtbarkeit bewirkenden Material bzw. einer entsprechenden Mischung.

Natürlich kann auch nur der Träger 4 zumindest anteilig aus der aushärtbaren Materialkomponente bestehen, wobei die Beschichtung 6 als übliche Kleberschicht ausgebildet sein könnte.

Darüber hinaus könnten die erwähnten Alternativen natürlich auch in beliebiger Kombination miteinander angewandt werden, d.h. beispielsweise könnte ein aushärtbarer Träger 4 in Kombination mit einer aushärtbaren und selbstklebenden Beschichtung 6 vorgesehen sein, oder auch eine aushärtbare Zusatzschicht 10 in Kombination mit einem aushärtbaren Träger 4 und/oder einer aushärtbaren Kleberschicht 8.

Die aushärtbare Beschichtung 6 bzw. besteht nun vorzugsweise aus einer zunächst thermoplastischen Materialmischung, die aufgrund von thermoplastischen Eigenschaften durch Erwärmen schmelzbar und so plastifizierbar ist, daß ein Auftragen auf den Träger 4 möglich ist. Im Falle der selbstklebenden und aushärtbaren Beschichtung 6 handelt es sich folglich um eine Art von Schmelzkleber, der insbesondere mit einer Schichtdicke von 40 bis 90 g/m² aufgetragen wird. Für dieses Auftragen wird die Materialmischung zunächst auf eine Schmelztemperatur ≤ 100° C erwärmt und in dem so plastifizierten Zustand insbesondere vollflächig auf den Träger 4 aufgetragen. Nach Abkühlung auf Raumtemperatur verfestigt sich die Mischung, bleibt aber erfindungsgemäß noch grundsätzlich flexibel. Diese bevorzugte Möglichkeit des Aufschmelzens zum Aufbringen der Beschichtung 6 bzw. der Zusatzschicht 10 (und dann vorzugsweise auch der Kleberschicht 8) auf den Träger 4 ist insofern von besonderem Vorteil, als die Materialmischung lösungsmittelfrei ist.

Im Falle der Ausführung nach Fig. 3a wird zunächst die Kleberschicht 8 vorzugsweise mit einer Schichtdicke von 40 bis 90 g/m2 aufgetragen, und dann wird die Zusatzschicht 10 punktuell oder abschnittsweise aufgetragen, z.B. als kreisförmige, rechteckförmige und/oder (längs)streifenförmige Flächenbereiche. Dies kann mit einem Siebrakel erfolgen. Hierbei beträgt die Schichtdicke jedes Abschnittes 10a der Zusatzschicht 10 - bezogen bzw. "hochgerechnet" auf 1 m² - bis zu etwa 50 g/m².

Allerdings ist es alternativ zu den als bevorzugt beschriebenen Möglichkeiten grundsätzlich ebenfalls denkbar, für die Beschichtung des Trägers 4 ein zunächst zum Aufbringen durch ein Lösungsmittel plastifiziertes und nachfolgend durch Verdampfen des Lösungsmittels getrocknetes Material zu verwenden. In diesem Fall kann eine Luftverschmutzung durch Absaugung des verdampften Lösungsmittels vermieden werden.

In allen Fällen erhält das jeweilige Material aufgrund der aushärtbaren Komponente durch eine kurzzeitige Erhitzung zumindest auf die Aushärttemperatur duroplastische Eigenschaften und dabei eine hohe mechanische Festigkeit und vorteilhafterweise auch eine thermische sowie chemische Beständigkeit. Die materialspezifische Aushärttemperatur liegt im Bereich zwischen 100°C und 200°C und insbesondere bei etwa 150°C bis 180°C, und die Härtezeit (Dauer der Erhitzung) liegt im Bereich von 5 bis 20 Minuten bei etwa 150°C.

Als für die Aushärtbarkeit hauptsächlich verantwortliche Komponente ist vorzugsweise ein Phenolharz (sogenanntes "Reaktionsharz") vorgesehen, insbesondere ein Novolak (Phenol-Novolak), in Kombination mit einem bestimmten Härter, wie beispielsweise modifiziertes Imidazol. Das Material der selbstklebenden Beschichtung 6 bzw. Kleberschicht 8 enthält als für die Klebeeigenschaften hauptsächlich verantwortliche Komponente vorzugsweise ein Epoxidharz, und zwar insbesondere in Kombination mit einem Trägerstoff (Klebstoff-Trägersubstanz), wobei es sich vorzugsweise um ein Ethylen-Vinylacetat-Copolymer (EVA), eventuell aber um Polyvinylbutyral (PVB) handelt. Bei der bevorzugten Ausführung gemäß Fig. 2 sind diese genannten Komponenten in Kombination enthalten, wobei dann durch die Kombination Phenolharz plus Epoxidharz gegebenenfalls ein anderes Härtungsmittel als das obengenannte eingesetzt wird. Eine bevorzugte Rezeptur für die Beschichtung 6 in der Ausführung der Fig. 2 hat die folgende, in Gewichtsteilen (Gewichtseinheiten, z.B. g oder kg) angegebene Zusammensetzung:
25 bis 40 Gewichtsteile Phenolharz, insbesondere Novolak (Phenol-Novolak)
60 bis 75 Gewichtsteile Epoxidharz (mittel-viskos) sowie als "Klebstoff-Trägersubstanz" insbesondere ca. 50 Gewichtsteile Ethylen-Vinylacetat-Copolymer (EVA) oder eventuell ca. 50 Gewichtsteile Polyvinylbutyral (PVB).

Vorzugsweise sind zudem bestimmte Füllstoffe enthalten, und zwar mit 5 bis 60 Gewichtsteilen, und es handelt sich beispielsweise um Casil und/oder Kaolin.

Eine bevorzugte Rezeptur für die Zusatzschicht 10 in der Ausführung nach Fig. 3 bzw. 3a hat demgegenüber folgende Zusammensetzung:
20 bis 50 Gewichtsteile Phenolharz, insbesondere Novolak (Phenol-Novolak),
50 bis 80 Gewichtsteile Epoxidharz (in fester Form),
5 bis 60 Gewichtsteile Füllstoffe.

Bei der Kleberschicht 8 handelt es sich dann bevorzugt um ein Hot Melt auf Basis von Kautschuk.

Es sollen nun die wichtigsten Eigenschaften der genannten, bevorzugt eingesetzten Materialkomponenten angegeben werden.

| 1. Epoxidharz | | |
|---|---|---|
| 1a.) | Typ | mittel-viskos |
| | Viskosität (25°C) | 8000-12000 mPa s |
| | Epoxid-Zahl | 22 |
| | Epoxid-Äquivalent | 188 |
| | Epoxid-Wert | 0,5 |
| | Topfzeit (mit TETA) | 20 - 40 min |
| | | |
| 1b.) | Typ | fest |
| | Epoxid-Zahl | 8 - 10 |
| | Epoxid-Äquivalent | 400 - 550 |
| | Epoxid-Wert | 0,1 - 0,3 |
| | Hydroxylwert | 0,1 - 0,4 |
| | EP nach Kofler | 40 - 90" |

| 2. Phenolharz | |
|---|---|
| Schmelzintervall | 40° - 80° C |
| Hexamingehalt | ca. 10% |
| Freies Phenol | ca. 0,5% |
| B-Zeit (Härtungszeit) | 40 - 200 sec bei 150°C |

| 3. EVA | |
|---|---|
| Schmelzindex | 150 - 500 dg/min |
| Vinylacetatgehalt | 25,0% - 33,0% |
| Zugfestigkeit | 2,0 - 5,2 MPa |
| Bruchdehnung | 800 - 1200% |
| Härte, shore A2 | 60 - 70 |
| Erweichungspunkt, Ring u. Kugel | 60°C - 70°C |

| 4. PVB | |
|---|---|
| K-Wert | 40 - 87 |
| Vinylacetatgehalt | 1,0% - 2,0% |
| Vinylacetalgehalt | 78% - 82% |
| Erweichungspunkt | 60°C - 70°C |

Für den Träger 4 kann mit Vorteil ein Gewebe oder ein Vlies aus Zellwolle und/oder Polyester verwendet werden, oder aber eine Folie insbesondere aus Kunststoff. Ebenfalls geeignet ist eine Metallfolie, beispielsweise eine Aluminiumfolie. Bevorzugte Merkmale und Eigenschaften des Trägers 4 lassen sich wie folgt angeben:

| | |
|---|---|
| Luftdurchlässigkeit | 400 l/sec m² nach DIN 53 887 |
| Reißdehnung | mind. 8% nach DIN 53 455 |
| Reißfestigkeit | 70 N/cm nach DIN 53 455 |
| Dicke | max. 250 µm |
| Besondere Eigenschaften | vorzugsweise schwer entflammbar |

Insbesondere für eine Verwendung des erfindungsgemäßen Klebebandes 1 in der Kfz-Industrie, d.h. für einen Einsatz in Kraftfahrzeugen, ist es vorteilhaft, wenn der Träger 4 selbst chemikalienbeständig, insbesondere öl- und benzinbeständig ist. Es kann aber auch vorgesehen sein, daß der Träger 4 auf seiner der Beschichtung 6 abgewandten Oberseite 12 (siehe Fig. 1, 2 und 3) eine entsprechend chemikalienbeständige, insbesondere öl- und benzinbeständige Beschichtung 14 aufweist, die in den Fig. 2 und 3 jeweils gestrichelt angedeutet ist.

In Fig. 4 ist nun die oben bereits geschilderte, bevorzugte Verwendung des erfindungsgemäßen Klebebandes 1 veranschaulicht, wobei ein aus mindestens einer selbst flexiblen Leitung 16, vorzugsweise aus mehreren solcher Leitungen 16, bestehender Leitungssatz 18 mit dem erfindungsgemäßen Klebeband 1 umwickelt wird. Hierbei wird der - insbesondere mit randlicher Überlappung des Klebebandes 1 - umwickelte und danach zunächst noch grundsätzlich flexible Leitungssatz 18 durch zumindest bereichsweises Erhitzen auf die Aushärttemperatur ganz oder stellenweise formstabil gemacht. Der Leitungssatz 18 besteht insbesondere aus einem Bündel von elektrischen Leitern, so daß es sich in diesem Fall um einen sogenannten Kabelbaum handelt. Alternativ oder zusätzlich kann der Leitungssatz 18 aber auch beliebige andere Arten von Leitungen enthalten, so beispielsweise Schlauch- und/oder Rohrleitungen und/oder Lichtleiter.

Die vorliegende Erfindung betrifft folglich auch ein Verfahren zum Herstellen eines formstabilen, aus mindestens einer flexiblen Leitung 16, vorzugsweise aus mehreren zumindest teilweise flexiblen Einzel-Leitungen 16, bestehenden Leitungssatzes 18, wobei erfindungsgemäß der Leitungssatz 18 mit dem erfindungsgemäßen Klebeband 1 umwickelt und nachfolgend - nach Ausrichten bzw. Verlegen in eine gewünschte Verlaufsform - zumindest bereichsweise kurzzeitig mindestens auf die Aushärttemperatur des Klebebandes 1 erhitzt und hierdurch formstabil gemacht wird.

Die Erfindung ist nicht auf das dargestellte und konkret beschriebene Ausführungsbeispiel beschränkt, sondern umfaßt auch alle im Sinne der Erfindung gleichwirkenden Ausführungen.So kann auch ein aushärtbares Band ohne klebende Eigenschaften geschaffen werden, indem einem flexiblen Bandmaterial eine aushärtbare Komponente beigegeben oder ein Bandmaterial (entsprechend dem Träger 4) mit einer aushärtbaren Schicht (entsprechend der Zusatzschicht 10) beschichtet wird. Mit einem solchen - nicht selbstklebenden - Wickelband können dann aber ebenfalls beispielsweise Leitungssätze oder andere Produkte umwickelt und durch Erhitzen formstabil gemacht werden. Dabei ist allerdings das Band - wegen der fehlenden Klebeeigenschaften - zumindest im Bereich seines freien Endes vor dem Aushärten auf geeignete Weise gegen Abwickeln zu fixieren; nach dem Aushärten ist das Band dann durch seine Formstabilität fixiert.

## Patentansprüche

1. Klebeband (1), bestehend aus einem flexiblen, bandförmigen Träger (4) und einer selbstklebende Eigenschaften aufweisenden Beschichtung (6), wobei der Träger (4) und/oder die Beschichtung (6) eine durch Erhitzen duroplastisch aushärtbare Materialkomponente, und zwar ein Phenolharz in Kombination mit einem Ethylen-Vinylacetat-Copolymer (EVA) oder mit Polyvinylbutyral (PVB), derart enthält, daß das Klebeband (1) nach einem durch eine vorübergehende Erhitzung zumindest auf eine materialspezifische Aushärttemperatur bewirkten Aushärten formstabile, duroplastische Eigenschaften aufweist.

2. Klebeband nach Anspruch 1,
**dadurch gekennzeichnet,** daß die Beschichtung (6) einschichtig ausgebildet ist und aus einer die aushärtbare Materialkomponente enthaltenden Klebermischung besteht.

3. Klebeband nach Anspruch 1,
**dadurch gekennzeichnet**, daß die Beschichtung (6) zweischichtig aus einer Kleberschicht (8) und einer die aushärtbare Materialkomponente enthaltenden Zusatzschicht (10) gebildet ist.

4. Klebeband nach einem oder mehreren der Ansprüche 1 bis 3,
**dadurch gekennzeichnet,** daß die die aushärtbare Materialkomponente enthaltende Beschichtung (6) insbesondere mit einer Schichtdicke von 40 bis 90 g/m² auf den Träger (4) aufgeschmolzen ist, wozu das Material der Beschichtung (6) vor einem erstmaligen Erhitzen auf die Aushärttemperatur thermoplastische Eigenschaften aufweist.

5. Klebeband nach einem oder mehreren der Ansprüche 1 bis 4,
**dadurch gekennzeichnet,** daß das Phenolharz der aushärtbaren Materialkomponente ein Novolak, vorzugsweise in Kombination mit einem Härter, ist.

6. Klebeband nach einem oder mehreren der Ansprüche 1 bis 5,
**dadurch gekennzeichnet**, daß die Beschichtung (6) bzw. die Kleberschicht (8) als für die Klebeeigenschaften verantwortliche Komponente ein Epoxidharz enthält.

7. Klebeband nach einem oder mehreren der Ansprüche 1, 2, 4 bis 6,
**dadurch gekennzeichnet**, daß das Material der einschichtigen, selbstklebenden Beschichtung (6) 25 bis 40 Gewichtsteile Phenolharz sowie in Kombination damit einerseits 60 bis 75 Gewichtsteile Epoxidharz und andererseits etwa 50 Gewichtsteile Ethylen-Vinylacetat-Copolymer (EVA) oder Polyvinylbutyral (PVB), enthält.

8. Klebeband nach Anspruch 7,
**dadurch gekennzeichnet,** daß das Material der Beschichtung (6) zusätzlich 5 bis 60 Gewichtsteile Füllstoffe, beispielsweise Casil und/oder Kaolin, enthält.

9. Klebeband nach einem oder mehreren der Ansprüche 1 bis 3,
**dadurch gekennzeichnet,** daß die die aushärtbare Materialkomponente enthaltende Beschichtung (6) aus einem zunächst zum Aufbringen auf den Träger (4) durch ein Lösungsmittel plastifizierten und nachfolgend durch Verdampfen des Lösungsmittels verfestigten Material besteht.

10. Klebeband nach einem oder mehreren der Ansprüche 1 bis 9,
**dadurch gekennzeichnet**, daß der Träger (4) ein Gewebe oder ein Vlies aus Zellwolle und/oder Polyester oder eine Folie insbesondere aus Kunststoff ist.

11. Klebeband nach einem oder mehreren der Ansprüche 1 bis 10,
**dadurch gekennzeichnet**, daß der Träger (4) auf seiner der Beschichtung (6) abgewandten Oberseite (12) eine - vorzugsweise öl- und benzinbeständige - Beschichtung (14) aufweist.

12. Verwendung eines Klebebandes (1) nach einem oder mehreren der Ansprüche 1 bis 11 zum Umwickeln eines aus mindestens einer flexiblen Leitung (16) bestehenden, insbesondere zum Einbau in ein Kraftfahrzeug vorgesehenen Leitungssatzes (18), der vorzugsweise mindestens eine elektrische Leitung, mindestens eine Schlauchleitung und/oder mindestens einen Lichtleiter enthält, und der insbesondere als Kabelbaum ausgebildet ist.

13. Verfahren zum Herstellen eines - im Sinne duroplastischer Eigenschaften - formstabilen, aus mindestens einer flexiblen Leitung (16), vorzugsweise aus mehreren flexiblen Einzel-Leitungen (16), bestehenden Leitungssatzes (18), insbesondere eines formstabilen Kabelsatzes für Kraftfahrzeuge,
**dadurch gekennzeichnet,** daß der Leitungssatz (18) mit einem Klebeband (1) nach einem oder mehreren der Ansprüche 1 bis 11 umwickelt und nachfolgend - nach Ausrichten bzw. Verlegen in eine gewünschte Verlaufsform - zumindest bereichsweise kurzzeitig mindestens auf die Aushärttemperatur der aushärtbaren Materialkomponente des Klebebandes (1) erhitzt und hierdurch formstabil gemacht wird.

## Claims

1. Adhesive tape (1) comprising a flexible tape-form carrier (4) and a coating (6) which has self-adhesive properties, with the carrier (4) and/or the coating (6) containing a material component which is heat-curable in thermoset manner, specifically a phenolic resin combined with an ethylene-vinyl acetate copolymer (EVA) or with polyvinyl butyral (PVB), such that the adhesive tape (1) has dimensionally stable thermoset properties after curing has been brought about by a preliminary heating at least to a curing temperature specific to the material.

2. Adhesive tape according to Claim 1, characterised in that the coating (6) is embodied as a single layer and comprises a mixture of adhesives which contains the curable material component.

3. Adhesive tape according to Claim 1, characterised in that the coating (6) is formed as two layers from an adhesive layer (8) and an additional layer (10) which contains the curable material component.

4. Adhesive tape according to one or more of Claims 1 to 3, characterised in that the coating (6) which contains the curable material component is melted onto the carrier (4) in particular at a layer thickness of from 40 to 90 g/m², for which purpose the material of the coating (6) has thermoplastic properties prior to being heated to the curing temperature for the first time.

5. Adhesive tape according to one or more of Claims 1 to 4, characterised in that the phenolic resin of the curable material component is a novolak, preferably combined with a curing agent.

6. Adhesive tape according to one or more of Claims 1 to 5, characterised in that the coating (6) or the adhesive layer (8) contains an epoxy resin as the component responsible for the adhesive properties.

7. Adhesive tape according to one or more of Claims 1, 2 and 4 to 6, characterised in that the material of the single-layer self-adhesive coating (6) contains from 25 to 40 parts by weight phenolic resin and combined therewith, on the one hand, from 60 to 75 parts by weight epoxy resin and, on the other hand, approximately 50 parts by weight ethylene-vinyl acetate copolymer (EVA) or polyvinyl butyral (PVB).

8. Adhesive tape according to Claim 7, characterised in that the material of the coating (6) contains additionally from 5 to 60 parts by weight fillers, for example Casil and/or kaolin.

9. Adhesive tape according to one or more of Claims 1 to 3, characterised in that the coating (6) which contains the curable material component comprises a material which is plastified initially by a solvent in order to apply it to the carrier (4) and is subsequently solidified by evaporating the solvent.

10. Adhesive tape according to one or more of Claims 1 to 9, characterised in that the carrier (4) is a viscose staple fibre and/or polyester woven or nonwoven or a film in particular of plastics material.

11. Adhesive tape according to one or more of Claims 1 to 10, characterised in that the carrier (4) has on the upper surface (12) thereof which is remote from the coating (6) a coating (14) which is preferably resistant to oil and petrol.

12. Use of an adhesive tape (1) according to one or more of Claims 1 to 11 for wrapping a wiring set (18) which comprises at least one flexible wire (16), is provided in particular for installation in a motor vehicle and contains preferably at least one electrical wire, at least one sheathed wire and/or at least one fibre-optic light guide, and is in particular embodied as a cable harness.

13. Process for making a wiring set (18) which is dimensionally stable within the meaning of thermoset properties and comprises at least one flexible wire (16), preferably a plurality of individual flexible wires (16), in particular a dimensionally stable cable set for motor vehicles, characterised in that the wiring set (18) is wrapped with an adhesive tape (1) according to one or more of Claims 1 to 11 and, after alignment or positioning in a desired flow shape, is subsequently heated briefly at least in some regions at least to the curing temperature of the curable material component of the adhesive tape (1), and is thus rendered dimensionally stable.

## Revendications

1. Bande adhésive (1) consistant en un support (4) souple en forme de bande, et un revêtement (6) ayant des propriétés autoadhésives, le support (4) et/ou le revêtement (6) contenant une composante de matière thermodurcissable, à savoir une résine phénoplaste en combinaison avec un copolymère éthylène/acétate de vinyle (EVA) ou avec un polybutyral de vinyle (PVB), de manière ce que la bande adhésive (1) présente des propriétés thermodurcissables et indéformables après un durcissement suite à un échauffement temporaire à au moins une température de durcissement spécifique à la matière.

2. Bande adhésive selon la revendication 1,
caractérisée en ce que le revêtement (6) est monocouche et consiste en un mélange d'adhésif contenant la composante de matière durcissable.

3. Bande adhésive selon la revendication 1,
caractérisée en ce que le revêtement (6) est formé de deux couches, à savoir une couche adhésive (8), et une couche supplémentaire (10) contenant la composante de matière durcissable.

4. Bande adhésive selon l'une ou plusieurs des revendications 1 à 3,
caractérisée en ce que le revêtement (6) contenant la composante de matière durcissable est appliquée par fusion sur le support (4) en formant en particulier une épaisseur de 40 à 90 g/m², la matière du revêtement (6) présentant des propriétés thermoplastiques avant un premier échauffement à la température de durcissement.

5. Bande adhésive selon l'une ou plusieurs des revendications 1 à 4,
caractérisée en ce que la résine phénoplaste de la composante de matière durcissable est une novolaque, de préférence en combinaison avec un durcisseur.

6. Bande adhésive selon l'une ou plusieurs des revendications 1 à 5,
caractérisée en ce que le revêtement (6), respectivement la couche adhésive (8), contiennent une résine époxy en tant que composante responsable des propriétés adhésives.

7. Bande adhésive selon l'une ou plusieurs des revendications 1, 2, et 4 à 6,
caractérisée en ce que la matière du revêtement monocouche autoadhésif (6) contient 25 à 40 parties en poids de résine phénoplaste, ainsi qu'en combinaison avec celle-ci, d'une part 60 à 75 parties en poids de résine époxy et, d'autre part, environ 50 parties en poids de copolymère éthylène/acétate de vinyle (EVA) ou de polybutyral de vinyle (PVB).

8. Bande adhésive selon la revendication 7,
caractérisée en ce que la matière du revêtement (6) contient en plus 5 à 60 parties en poids de matières de remplissage, par exemple du casil et/ou du kaolin.

9. Bande adhésive selon l'une ou plusieurs des revendications 1 à 3,
caractérisée en ce que le revêtement (6) contenant la composante de matière durcissable consiste en une matière qu'on plastifie d'abord au moyen d'un solvant pour l'appliquer sur le support (4), et qu'on durcit ensuite par évaporation du solvant.

10. Bande adhésive selon l'une ou plusieurs des revendications 1 à 9,
caractérisée en ce que le support (4) est un tissu ou un non tissé de fibranne et/ou de polyester, ou bien une feuille réalisée en particulier en une matière synthétique.

11. Bande adhésive selon l'une ou plusieurs des revendications 1 à 10,
caractérisée en ce que le support (4) comporte sur sa face supérieure (12), opposée au revêtement (6), un revêtement (14) résistant de préférence à l'huile et à l'essence.

12. Utilisation d'une bande adhésive (1) selon l'une ou plusieurs des revendications 1 à 11 pour entourer un ensemble de conducteurs (18) consistant au moins en un conduit souple (16), prévu en particulier pour être incorporé dans un véhicule à moteur, cet ensemble de conducteurs contenant de préférence au moins un fil électrique, au moins un conduit tubulaire et/ou au moins un conducteur de lumière, et ayant en particulier la forme d'un faisceau de câbles.

13. Procédé de réalisation d'un ensemble de conducteurs (18), de préférence d'un faisceau de câbles indéformable pour véhicules à moteur, indéformable de par ses propriétés thermodurcissables et consistant en au moins un conduit souple (16), de préférence en plusieurs conduits individuels souples (16),
caractérisé en ce que l'ensemble de conducteurs (18) est entouré d'une bande adhésive (1) selon l'une ou plusieurs des revendications 1 à 11, et, après son orientation ou montage selon un tracé désiré, est ensuite au moins partiellement chauffé pendant un court laps de temps à la température de durcissement de la composante de matière durcissable de la bande adhésive (1), et ainsi rendu indéformable.
